# EUROPEAN PATENT APPLICATION

(11) **EP 4 140 903 A1**
(43) Date of publication of application: **01.03.2023**
(21) Application number: 21793240.9
(22) Date of filing: 16.04.2021
(51) Int. Cl.: B65C 9/06, B65H 5/08, B25J 9/00

(54) **LABEL GRABBING METHOD AND GRABBING MECHANISM**

(30) Priority: 24.04.2020 CN 202010335322
(71) Applicant: Qingdao Highway Iot Technology Co., Ltd, Shibei Qingdao, Shandong 266042 (CN); Mesnac Co. Ltd., Qingdao, Shandong 266042 (CN)
(72) Inventor: CHEN, Haijun, Qingdao, Shandong 266042 (CN); DONG, Lanfei, Qingdao, Shandong 266042 (CN); WANG, Luxin, Qingdao, Shandong 266042 (CN); YAO, Yong, Qingdao, Shandong 266042 (CN)
(74) Representative: Winter, Brandl - Partnerschaft mbB
(86) International application number: PCT/CN2021/087821
(87) International publication number: WO 2021/213277

(57) **Abstract**

The present invention provides a grabbing method for an electronic tag and an electronic tag grabbing mechanism. The grabbing method includes: S1: a conveying component (20) drives a plurality of electronic tags (10) to move at the same time, so as to move the plurality of electronic tags to a grabbing position; S2: a pick-up component (30) picks up at least two of the plurality of electronic tags (10) at the grabbing position. The grabbing method of the present invention solves the problem in the related art that the grabbing method for the electronic tag consumes a relatively large amount of the electronic tag grabbing mechanism.

## Description

### Cross-Reference to Related Application

This application claims priority to Chinese Patent Application No. 202010335322.7, filed with the CNIPA on 24 April 2020 and entitled "Grabbing Method for Electronic Tag and Grabbing Mechanism".

### Technical Field

The present invention relates to the technical field of rubber, and in particular to a grabbing method for an electronic tag and a grabbing mechanism.

### Background

Currently, an RFID electronic tag (hereinafter an electronic tag for short) for a tire needs to be picked up and placed on a layer of film in advance before a laminating (pressing two layers of rubber film). Due to the limitation of packing materials of the RFID electronic tag for a tire, the current method for picking up and placing a electronic tag can pick up only one electronic tag at a time. During continuous operation, each time one electronic tag is picked up, the operations of locating and picking up the electronic tag need to be repeated, which causes great hardware loss to the device, and is unfavorable for cost saving.

### Summary

The main purpose of some embodiments of the present invention is to provide a grabbing method for an electronic tag and a grabbing mechanism, so as to solve the problem in the related art that the grabbing method for an electronic tag consumes a large amount of the electronic tag grabbing mechanism.

In order to achieve the described object, according to one embodiment of the present invention provided a grabbing method for an electronic tag. The grabbing method for an electronic tag includes: S1: a conveying component drives a plurality of electronic tags to move at the same time, so as to move the plurality of electronic tags to a grabbing position; S2: a pick-up component picks up at least two of the plurality of electronic tags at the grabbing position.

In an implementation mode, S2 includes: S21: a detection component detecting whether the at least two of the plurality of electronic tags are on the grabbing position; S22: when it is detected that the at least two of the plurality of electronic tags are located at the grabbing position, the pick-up component picks up the at least two of the plurality of electronic tags at the grabbing position.

In an implementation mode, S2 further includes S210 between S21 and S22: S210: When the at least two of the plurality of electronic tags are detected at the grabbing position, the conveying component stops moving so as to position the at least two of the plurality of electronic tags in the grabbing position.

In an implementation mode, wherein in the S22, the pick-up component picks up two non-adjacent electronic tags of the at least two of the plurality of electronic tags at the grabbing position.

According to another embodiment of the present invention, provided an electronic tag grabbing mechanism, including: a conveying component, configured for transporting electronic tags; a pick-up component, provided at one side of the conveying component for pick up at least two of the electronic tags on the conveying component at the same time.

In an implementation mode, the electronic tag grabbing mechanism further includes: a detecting component, provided on one side of the conveying component and configured for detecting whether the at least two of the electronic tags is on the conveying component; wherein the detecting component is connected to the pick-up component, so that after the detecting component detects the at least two of the electronic tags on the conveying component, the pick-up component picks up the at least two of the electronic tags on the conveying component.

In an implementation mode, the electronic tag grasping mechanism further includes: a driving component, connected to the conveying component for driving the conveying component to move the at least two of the electronic tags; wherein the driving component is connected to the detection component, so that after the detection component detects the at least two of the electronic tags on the conveying component, the driving component stops driving the conveying component to move, and the pick-up component picks up the at least two of the electronic tags on the conveying component.

In an implementation mode, the detection component includes a photoelectric sensor.

In an implementation mode, the pick-up component includes a plurality of pick-up portions, provided at intervals to respectively pick up each of the at least two of the electronic tags on the conveying component.

In an implementation mode, the plurality of pick-up portions comprise a first pick-up portion and a second pick-up portion, the first pick-up portion and the second pick-up portion are respectively configured to pick up two non-adjacent electronic tags of the at least two of the electronic tags on the conveying component.

In an implementation mode, the electronic tag grasping mechanism further includes: a carrying component, the carrying component being placed on the conveying component so as to move under the driving of the conveying component, wherein a plurality of material-placing slots are provided on the carrying component, and each of the at least two of the electronic tags is respectively provided in corresponding material-placing slot of the plurality of material-placing slots so as to move under the driving of the carrying component.

The grabbing method for an electronic tag using the technical solution of the present invention is mainly configured for picking up RFID electronic tags for tires. In the grabbing method for an electronic tag, firstly, a plurality of electronic tags are placed at intervals on a conveying component, then the conveying component moves the plurality of electronic tags to a grabbing position at a constant speed, and then a pick-up component includes a plurality of pick-up portions, and the plurality of pick-up portions at the same time act to pick up the plurality of electronic tags, thereby achieving the purpose of the pick-up component picking up the plurality of electronic tags in one action, reducing the number of picking-up times of the pick-up component, and solving the problem in the related art of relatively high loss of a grabbing mechanism in a grabbing method for an electronic tag.

### Brief Description of the Drawings

The accompanying drawings, which form a part of the present invention, are used for providing a further understanding of the present invention. The schematic embodiments and illustrations of the present invention are used for explaining the present invention, and do not form improper limits to the present invention. In the drawings:
Fig. 1 shows a schematic diagram of a detection component of an embodiment of an grabbing method for an electronic tag according to the present invention when the at least two of the plurality of electronic tags are detected for the first time;
Fig. 2 shows a schematic diagram of a pick-up component of an embodiment of an grabbing method for an electronic tag in the present invention when the at least two of the plurality of electronic tags are picked up for the first time;
Fig. 3 shows a schematic diagram of a detection component of an embodiment of an grabbing method for an electronic tag in the present invention when the at least two of the plurality of electronic tags are detected for the second time;
Fig. 4 shows a schematic diagram of a pick-up component of an embodiment of an grabbing method for an electronic tag in the present invention when the at least two of the plurality of electronic tags are picked up for the second time;
Fig. 5 shows a front view of a carrying component of an embodiment of the grabbing mechanism of the present invention;
Fig. 6 illustrates a side view of a carrying component of an embodiment of a grasping mechanism of the present invention;
Fig. 7 shows a schematic view of an embodiment of a grabbing mechanism of the present invention when a transport component moves the at least two of the plurality of electronic tags.

### Detailed Description of the Embodiments

It is important to note that the embodiments of the present disclosure and the characteristics in the embodiments can be combined under the condition of no conflicts. The present disclosure will be described below with reference to the drawings and embodiments in detail.

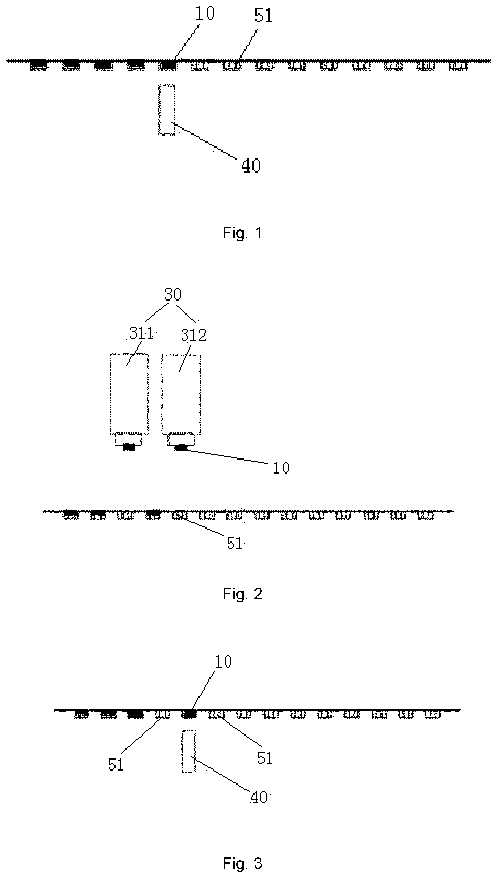

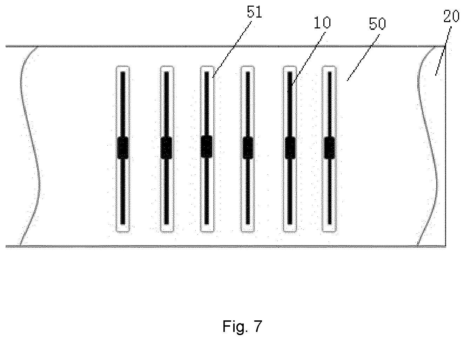

The present invention provided a grabbing method for an electronic tag Referring to Figs. 1-7, An grabbing method for an electronic tag includes: S1: a conveying component 20 drives a plurality of electronic tags 10 to move at the same time so as to move the plurality of electronic tags 10 to a grabbing position; S2: the pick-up component 30 picks up at least two of the plurality of electronic tags10 at the grabbing positions.

The grabbing method for the electronic tag of the present invention is mainly configured for grabbing RFID electronic tags. In the grabbing method for the electronic tag, firstly, a plurality of electronic tags are placed at intervals on a conveying component; then, the conveying component moves the plurality of electronic tags to a grabbing position at a constant speed; and then, the pick-up component includes a plurality of pick-up portions, and the plurality of pick-up portions moving at the same time to pick up the at least two of the plurality of electronic tags plurality of electronic tag, thereby achieving the purpose of the pick-up component pickup the at least two of the plurality of electronic tags plurality of electronic tag in one action, reducing the number of times of pick-up of the pick-up component, and solving the problem in the related art that the grabbing method for the electronic tag consumes a relatively large amount of the electronic tag grabbing mechanism.

S2 includes: S21: a detection component 40 detecting whether the at least two of the plurality of electronic tags 10 at the grabbing position; S22: when it is detected that the at least two of the plurality of electronic tags 10 are located at the grabbing position, the pick-up component 30 picks up the at least two of the plurality of electronic tags10 at the grabbing position.

In this embodiment, in order to enable a pick-up component to accurately pick up an electronic tag on a conveying component, a detection component is provided at the bottom of the conveying component; when the detection component detects that the at least two of the plurality of electronic tags exists at a grabbing position, a signal is sent to enable the pick-up component to pick up the at least two of the plurality of electronic tags at the grabbing position; and if the detection component does not detect the electronic tag, the pick-up component does not move.

S2 further includes S210 between S21 and S22: S210: When the at least two of the plurality of electronic tags 10are detected at the grabbing position, the conveying component 20 stops moving so as to position the at least two of the plurality of electronic tags10 in the grabbing position.

In the present embodiment, in order to facilitate the pick-up component to pick up the at least two of the plurality of electronic tags, when the detection component detects the at least two of the plurality of electronic tags, a signal is sent to the control component first, and then the control component controls the conveying component to stop moving, so that the at least two of the plurality of electronic tags are positioned at the grabbing position, and then the pick-up component pick up the at least two of the plurality of electronic tags at the grabbing position.
in the S22, the pick-up component30 picks up two non-adjacent electronic tags 10 of the at least two of the plurality of electronic tags 10 at the grabbing position.

In an exemplary implementation mode, the pick-up component picks up the electronic tag 10at intervals, i.e., when the pick-up component doing a grabbing action, the pick-up component picks up the first electronic tag and the third electronic tag in a first action, the second and fourth electronic tag in a second action, the fifth and seventh electronic tag in a third action, and so on at intervals.

The present invention further provides an electronic tag grabbing mechanism, comprises a conveying component 20 and a pick-up component 30, The conveying component 20 configured for transporting electronic tag 10; the pick-up component 30 is provided at one side of the conveying component for pick up at least two of the electronic tags on the conveying component at the same time.

The electronic tag grabbing mechanism of the present invention is suitable for the described grabbing method for the electronic tag, and is used for grabbing a plurality of electronic tags at the same time. The grabbing mechanism includes a conveying component and a pick-up component. The conveying component drives the plurality of electronic tags to move at the same time. The pick-up component grabbing at least two of the plurality of electronic tags on the conveying component at the same time. Compared with the pick-up component in the related art, the pick-up component in the present embodiment can grab a plurality of electronic tags by means of one action, and therefore the efficiency is higher, the number of actions of the pick-up component is reduced, and the service life of the grabbing mechanism is prolonged.

The electronic tag grabbing mechanism further includes a detection component 40, wherein the detection component 40 is provided on one side of the conveying component 20 and configured for detecting whether the at least two of the electronic tags 10 are on the conveying component 20; wherein the detecting component 40 is connected to the pick-up component, so that after the detecting component 40 detects the at least two of the electronic tags 10 on the conveying component 20, the pick-up component 30 picks up the at least two of the electronic tags 10 on the conveying component 20.The electronic tag grasping mechanism further includes a driving component, and the driving component is connected to the conveying component 20 for driving the conveying component 20 to move the at least two of the electronic tags 10; wherein the driving component is connected to the detection component 40, so that after the detection component 40 detects the at least two of the electronic tags 10 on the conveying component 20, the driving component stops driving the conveying component 20 to move, and the pick-up component 30 picks up the at least two of the electronic tags 10 on the conveying component 20. The detection component 40 includes a photoelectric sensor.

The electronic tag grabbing mechanism in the present embodiment includes a detection component. The detection component is provided with a signal transmitting part and a signal receiving part. The signal transmitting part is provided at the bottom of the grabbing position, and the signal receiving part is provided above the grabbing position. When a electronic tag passes through the grabbing position, the signal receiving part cannot receive a signal, thereby giving an indication that there is a electronic tag on the grabbing position; and after receiving the indication that there is a electronic tag on the grabbing position, a driving component stops driving a conveying component to move so as to stop the electronic tag on the grabbing position, and at this time, the pick-up component picks up the electronic tag on the grabbing position.

The pick-up component 30 includes a plurality of pick-up portions provided at intervals to respectively pick up each of the at least two of the electronic tags10 on the conveying component 20.

The plurality of pick-up portions includes a first pick-up portion311 and a second pick-up portion 312 for picking up two non-adjacent electronic tags 10 on the conveying component 20 respectively.

The electronic tag grasping mechanism further includes: a carrying component 50, the carrying component 50 being placed on the conveying component 20 so as to move under the driving of the conveying component 20, wherein a plurality of material-placing slots 51 are provided on the carrying component 50, and each of the at least two of the electronic tags 10 is respectively provided in corresponding material-placing slot 51 of the plurality of material-placing slots 51 so as to move under the driving of the carrying component 50.

The carrying component 50 in the present embodiment is a feeding packaging of electronic tag. A plurality of material-placing slots 51 are provided on the feeding packaging of electronic tag at equal intervals for respectively loading electronic tags. After the detection component detects the first electronic tag, the position of the following electronic tag is fixed, and then the position of the pick-up component is set according to the electronic tag. Thus, as long as the detection component detects the first electronic tag, the pick-up component can correspondingly pick up the plurality of electronic tags.

In an exemplary implementation mode, the conveying component is a conveyor belt, the driving component is a motor, and the pick-up component picks up the electronic tag by magnetic or grabbers.

From the above description, it can be seen that the above embodiments of the present invention achieve the following technical effects:
The grabbing method for an electronic tag of the present invention is as follows: as shown in Fig. 1, a carrying component is driven to move forward by a conveying component; an electronic tag moves forward along with the carrying component in a material-placing slot of the carrying component; a sensor is placed below the carrying component; when the sensor detects that a electronic tag passes by, the carrying component stops conveying; and since the carrying component is equidistant to the material-placing slot of the carrying component, So complete the positioning of the electronic tag at the current position 1 as well as the electronic tag at its interval position 3.

As shown in Fig. 2, at this time, two sets of pick-up portions can be placed at intervals of the positions 1 and 3, and the electronic tags at the positions 1 and 3 can be picked up at the same time.

As shown in Fig. 3, after two sets of pick-up portions complete the picking of the position 1 and the position 3, the carrying component continues to be conveyed forward; when the same sensor detects an electronic tag, the second positioning is completed, and the carrying component stops being conveyed forward; and since the material-placing slots on the carrying component are distributed uniformly, Also complete the positioning of electronic tags in the position 2 and the position 4.

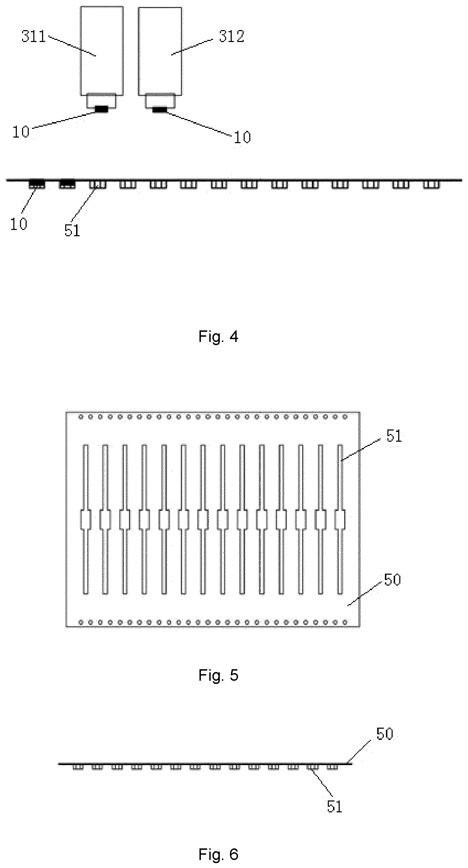

As shown in Fig. 4, at this time, the electronic tags at positions 2 and 4 are picked up by the two pick-up portions, and after the pick-up of positions 2 and 4 is completed by the two pick-up portions, the electronic tags in the material-discharging slots at positions 2, 3 and 4 of the carrying component are all picked up, and the carrying component continues to move forward; when the sensor detects the electronic tags again, the carrying component stops moving, and the previous positioning is completed, and a new positioning and picking cycle begins.

Since the positions of the material-placing slots on the carrying component are distributed uniformly, Once an electronic tag of the at least two of the electronic tags 10 positioned, the other electronic tags of the at least two of the electronic tags 10 positioned together; after the first positioning, two separate grabbing mechanisms grab the electronic tag of the positioning 1 and the electronic tag of thepositioning3, so as to grab the two electronic tags at one time; after the second positioning, Grabbing the electronic tag of the positioning 2 and the electronic tag of the positioning 4, and all the electronic tags in the interval position that are missed in the first picking up can be picked up, thereby realizing the function of picking up two electronic tags every time on average.

By the same reasoning, if three or more electronic tags at the locating position and the interval position thereof are grabbed after three or more grabbing mechanisms are located, the function of grabbing three or more electronic tags on average can be realized.

The present invention can realize the positioning of a plurality of electronic tags at one time;

The present invention can realize grabbing a plurality of electronic tags at one time;

By realizing the functions that grabbing a plurality of electronic tags at one time positioning, the present invention solves the problems of relatively high hardware loss of a single positioning and grabbing mechanism and relatively high requirements for the accuracy of repeated positioning, and improves the production efficiency of the whole process.

Sensor positioning in this application includes, but is not limited to, the use of self-reflecting electrical, counter-propagating electrical, counter-propagating fiber, proximity switches, or the like.

The electronic tag positioning function realized by the sensor in the present invention can also be realized by using an encoder and a counter to detect the conveying distance of a conveying component.

The electronic tag positioning function achieved by the sensor in the present invention can also be achieved by visual detection and color detection.

The foregoing descriptions are merely exemplary embodiments of the present invention, but are not intended to limit the present invention. For those skilled in the art, the present invention may have various modifications and variations. Any modifications, equivalent replacements, improvements and the like made within the spirit and principle of the present invention shall belong to the scope of protection of the present invention.

## Claims

1. A grabbing method for an electronic tag, comprising:
S1: a conveying component (20) drives a plurality of electronic tags (10) to move at the same time, so as to move the plurality of electronic tags (10) to a grabbing position;
S2: a pick-up component (30) picks up at least two of the plurality of electronic tags (10) at the grabbing position.

2. The grabbing method for the electronic tag as claimed in claim 1, wherein the S2 comprising:
S21: a detection component (40) detecting whether the at least two of the plurality of electronic tags (10) are on the grabbing position;
S22: when it is detected that the at least two of the plurality of electronic tags (10) are located at the grabbing position, the pick-up component (30) picks up the at least two of the plurality of electronic tags (10) at the grabbing position.

3. The grabbing method for the electronic tag as claimed in claim 2, wherein S2 further comprising S210 between S21 and S22:
S210: When the at least two of the plurality of electronic tags (10) re detected at the grabbing position, the conveying component (20) stops moving so as to position the at least two of the plurality of electronic tags (10) in the grabbing position.

4. The grabbing method for the electronic tag as claimed in claim 2, wherein in the S22, the pick-up component (30) picks up two non-adjacent electronic tags (10) of the at least two of the plurality of electronic tags (10) at the grabbing position.

5. An electronic tag grabbing mechanism, comprising:
a conveying component (20), configured for transporting electronic tags (10);
a pick-up component (30), provided at one side of the conveying component (20) for pick up at least two of the electronic tags (10) on the conveying component (20) at the same time.

6. The electronic tag grabbing mechanism as claimed in claim 5, further comprising:
a detecting component (40), provided on one side of the conveying component (20) and configured for detecting whether the at least two of the electronic tags (10) is on the conveying component (20);
wherein the detecting component (40) is connected to the pick-up component (30), so that after the detecting component (40) detects the at least two of the electronic tags (10) on the conveying component (20), the pick-up component (30) picks up the at least two of the electronic tags (10) on the conveying component (20).

7. The electronic tag grabbing mechanism as claimed in claim 6, further comprising:
a driving component, connected to the conveying component (20) for driving the conveying component (20) to move the at least two of the electronic tags (10);
wherein the driving component is connected to the detection component (40), so that after the detection component (40) detects the at least two of the electronic tags (10) on the conveying component (20), the driving component stops driving the conveying component (20) to move, and the pick-up component (30) picks up the at least two of the electronic tags (10) on the conveying component (20).

8. The electronic tag grabbing mechanism as claimed in claim 6, wherein the detection component (40) comprises a photoelectric sensor.

9. The electronic tag grabbing mechanism as claimed in claim 5, wherein the pick-up component (30) comprises:
a plurality of pick-up portions, provided at intervals to respectively pick up each of the at least two of the electronic tags (10) on the conveying component (20).

10. The electronic tag grabbing mechanism as claimed in claim 9, wherein the plurality of pick-up portions comprise a first pick-up portion (311) and a second pick-up portion (312), the first pick-up portion (311) and the second pick-up portion (312) are respectively configured to pick up two non-adjacent electronic tags (10) of the at least two of the electronic tags (10) on the conveying component (20).

11. The electronic tag grabbing mechanism as claimed in claim 5, further comprising:
a carrying component (50), the carrying component (50) being placed on the conveying component (20) so as to move under the driving of the conveying component (20), wherein a plurality of material-placing slots (51) are provided on the carrying component (50), and each of the at least two of the electronic tags (10) is respectively provided in corresponding material-placing slot (51) of the plurality of material-placing slots so as to move under the driving of the carrying component (50).
